# EUROPÄISCHE PATENTANMELDUNG

(11) **EP 4 759 712 A1**
(43) Veröffentlichungstag der Anmeldung: **17.06.2026**
(21) Anmeldenummer: 24219647.5
(22) Anmeldetag: 13.12.2024
(51) Int. Cl.: B64D 11/06

(54) **FLUGZEUGABSCHNITT UND FLUGZEUG MIT ZUSÄTZLICHEM SICHERHEITSGURT**

(71) Anmelder: AIRBUS Operations GmbH, 21129 Hamburg (DE)
(72) Erfinder: Fritz, Markus, 21129 Hamburg (DE); Behnke, Dennis, 21129 Hamburg (DE)
(74) Vertreter: Schornack, Oliver

(57) **Zusammenfassung**

Die vorliegende Offenbarung betrifft einen Flugzeugabschnitt (100) und ein Flugzeug mit einem zusätzlichen Sicherheitsgurt, dessen Gurtaufwickler an einer Primärstrukturbaugruppe befestigt ist und durch ein Seitenverkleidungselement 130 in eine Passagierkabine des Flugzeugabschnitts geführt wird.

## Beschreibung

Die vorliegende Offenbarung betrifft einen Flugzeugabschnitt sowie ein Flugzeug mit einem zusätzlichen Sicherheitsgurt. Insbesondere betrifft die vorliegende Offenbarung einen Flugzeugabschnitt und ein Flugzeug mit einem in der Primärstruktur verankerten Sicherheitsgurt.

In Flugzeugen müssen Passagiere davor geschützt werden, bei einer starken Verzögerung des Flugzeugs (zum Beispiel starkes Bremsen und/oder Aufprall) Kopfverletzungen davonzutragen. Ein Baustein dieses Schutzes ist ein Sicherheitsgurt, insbesondere ein Zweipunktgurt oder Hüftgurt, der um das Becken des Passagiers geschnallt ist, um den Passagier in dem Passagiersitz zu halten. Ein weiterer Baustein besteht darin, Elemente, die vor einem Passagiersitz angeordnet sind, so auszugestalten, dass sie nicht brechen und/oder splittern, wodurch Verletzungen, wenn ein Passagier mit dem Kopf dagegen stößt, zumindest nicht stärker ausfallen.

In manchen Sitzkonfigurationen, wie zum Beispiel in der Business Class oder First Class, gibt es auch Dreipunktgurte, wobei zum Beispiel der Schultergurt an einem (nahezu) üblichen Zweipunktgurt eingehängt wird.

In manchen Bereichen der Flugzeugkabine ist es jedoch nicht möglich, einen Dreipunktgurt vorzusehen. Zum Beispiel können Rückenlehnen von dünnen Sitzen, wie sie oft in der Economy Class raumsparend eingesetzt werden, nicht die Lasten aufnehmen, die durch einen Dreipunktgurt auftreten können. Auch mehrere der Raumkomfort für den dahinter sitzenden Passagiere eingeschränkt. Auf der anderen Seite können auch Einbauten in der Passagierkabine zu nah an einem Passagiersitz sein, sodass eine Verletzungsgefahr bei einer starken Verzögerung von diesen Einbauten ausgeht. Daher wird, in Flugzeuglängsrichtung betrachtet, hinter solchen Einbauten die gesamte Passagiersitzreihe nach hinten verlegt oder um einen Sitz reduziert, sodass ein Passagiersitz verloren geht.

Es ist daher die Aufgabe der vorliegenden Erfindung, einen Flugzeugabschnitt und Flugzeug mit verbessertem Sicherheitskonzept bereitzustellen.

Diese Aufgabe wird von der vorliegenden Erfindung, wie sie durch die unabhängigen Ansprüche definiert ist, gelöst. Bevorzugte Ausführungsformen ergeben sich aus den abhängigen Ansprüchen.

Gemäß einem ersten Aspekt zum besseren Verständnis der vorliegenden Offenbarung umfasst ein Flugzeugabschnitt, der einen Teil einer Kabine eines Flugzeugs begrenzt, eine leiterförmige Primärstrukturbaugruppe, die mindestens zwei Rahmen und eine Mehrzahl von Stringer umfasst. Die Rahmen sind dabei in Umfangsrichtung meist in einer Querschnittsfläche des Flugzeugs angeordnet und bilden so zum Beispiel die Querschnittsform des Flugzeugs. Die Stringer sind in Längsrichtung des Flugzeugs angeordnet und sind zwischen zwei Rahmen angeordnet oder überspannen mindestens zwei benachbarte Rahmen. Ferner kann zum Beispiel eine Außenhaut des Flugzeugs außenseitig auf die Rahmen und/oder die Stringer angebracht werden.

Der Flugzeugabschnitt umfasst ferner ein Halteelement, einen Gurtaufwickler, der an dem Halteelement befestigt ist, und einen Sicherheitsgurt, der auf dem Gurtaufwickler aufgewickelt ist. Dadurch lässt sich in unmittelbarer Nähe der Primärstrukturbaugruppe ein zusätzlicher Sicherheitsgurt in dem Flugzeugabschnitt vorsehen. Dies ermöglicht insbesondere die Anordnung eines Passagiersitzes (direkt) neben der leiterförmigen Primärstrukturbaugruppe (hier auch Randsitz genannt), der von dem Sicherheitsgurt profitieren kann. Diese Passagiersitz kann demnach auch in einem Bereich platziert werden, in dem bisher kein Passagiersitz aus den eingangs erwähnten Gründen des Verletzungsrisikos vorgesehen war.

Lediglich als Beispiel ist die erste Sitzreihe hinter einer Flugzeugtür, die eine Öffnung in der Außenhaut des Flugzeugs verschließt, oft nach hinten versetzt oder weist einen Sitz weniger auf, da die Flugzeugtür innenseitig diverse Bauteile aufweist, an denen ein Passagier sich bei starken Verzögerungen den Kopf verletzen könnte. Beispielhaft ist hier die Verkleidung der Notfallrutsche, Griffe, Hebel und dergleichen genannt.

Durch den in dem hier beschriebenen Flugzeugabschnitt bereitgestellten (zusätzlichen) Sicherheitsgurt, lässt sich für diesen Randsitz eine zusätzliche Rückhaltefunktion für den Passagier implementieren. Dies ermöglicht einerseits, die Sitzreihen näher an der Tür anzuordnen, wodurch insgesamt mehr Sitze in der Passagierkabine oder mit komfortablerem Abstand angeordnet werden können. Andererseits ermöglicht dies den Einbau einer vollständigen Sitzreihe, also ohne auf einen Randsitz direkt hinter der Tür zu verzichten. Da Flugzeuge üblicherweise mehrere Flugzeugtüren aufweisen, lassen sich somit deutlich mehr Sitze in einem Flugzeug einbauen, als dies bisher der Fall war; zum Beispiel mindestens einer pro Tür.

Der Gurtaufwickler weist eine Rückhaltefunktion auf, wie sie bei bekannten Gurtaufwicklern vorgesehen ist. Dabei wird der Sicherheitsgurt nicht weiter aus dem Gurtaufwickler abgerollt, wenn eine schnelle Zugbewegung auf den Sicherheitsgurt (aus dem Gurtaufwickler heraus) auftritt.

In einer Implementierungsvariante kann das Halteelement zwischen zwei benachbarten Stringern der Mehrzahl von Stringer angeordnet und an jedem der zwei benachbarten Stringer befestigt sein. Das Halteelement ist somit parallel zu den mindestens zwei Rahmen angeordnet, stellt also ein im wesentlichen vertikales Halteelement dar. Dadurch lassen sich Lasten, die von dem Sicherheitsgurt ausgehen, sehr gut in die Primärstruktur des Flugzeugs einleiten.

In einer Implementierungsvariante kann das Halteelement zwischen zwei benachbarten der mindestens zwei Rahmen angeordnet und an jedem der zwei benachbarten Rahmen befestigt sein. Das Halteelement ist somit parallel zu den Stringern angeordnet, stellt also ein im wesentlichen horizontales Halteelement dar. Auch hierbei lassen sich Lasten von dem Sicherheitsgurt gut in die Primärstruktur des Flugzeugs einleiten.

In einer Implementierungsvariante kann das Halteelement an einem der mindestens zwei Rahmen befestigt sein. Da der Rahmen durch die Anordnung der Mehrzahl von Stringer und/oder durch die daran befestigte Außenhaut bereits eine gute Aussteifung aufweist, lassen sich auch an einem einzelnen Rahmen die Lasten von dem Sicherheitsgurt gut in die Primärstruktur des Flugzeugs einleiten. Lediglich als Beispiel kann der Gurtaufwickler seitlich an dem Rahmen befestigt sein. Alternativ kann der Rahmen auch eine Aussparung aufweisen, in der der Gurtaufwickler angeordnet ist.

Insgesamt lässt sich der Gurtaufwickler somit direkt oder indirekt an der Primärstrukturbaugruppe befestigen. Der Gurtaufwickler nimmt somit keinen Raum in der Passagierkabine ein, und bildet somit keine Komforteinbußen und auch kein zusätzliches Verletzungsrisiko für Passagiere.

In einer Implementierungsvariante kann das Halteelement und/oder der Gurtaufwickler dazu eingerichtet sein, mindestens horizontal verschoben zu werden. Dies ist insbesondere hilfreich, da die Anordnung von Passagiersitzen in der Passagierkabine üblicherweise variabel ist. So können zum Beispiel die Betreiber von Flugzeugen die Sitzreihen entlang von Sitzschienen in Längsrichtung des Flugzeugs an unterschiedlichen Orten anbringen. Um den Gurtaufwickler in Längsrichtung des Flugzeugs optimal für den zugehörigen Passagiersitz auszurichten, ist das horizontale Verschieben des Gurtaufwicklers und/oder des Halteelements vorteilhaft.

Lediglich als Beispiel kann das Halteelement oder der Gurtaufwickler in bestimmten beabstandeten Positionen befestigt werden, wobei der Abstand zwischen den Positionen beispielsweise dem Abstand entsprechen kann, in dem die Passagiersitze in Längsrichtung unterschiedlich angeordnet werden können.

Ebenfalls lediglich als Beispiel kann der Gurtaufwickler auch an einer Sitzschiene befestigt werden und somit in verschiedenen horizontalen Positionen angeordnet werden. So kann es sich bei dem Halteelement auch um eine Sitzschiene handeln, oder das Halteelement umfasst eine Sitzschiene.

In einer Implementierungsvariante kann der Flugzeugabschnitt ferner ein Seitenverkleidungselement umfassen, das die Kabine des Flugzeugs seitlich begrenzt und mit wenigstens manchen der mindestens zwei Rahmen und/oder der Mehrzahl von Stringer gekoppelt ist. So können beispielsweise übliche Halteelemente für ein Seitenverkleidungselement an den Rahmen und/oder Stringern befestigt sein. Auf jeden Fall deckt das Seitenverkleidungselement die Primärstrukturbauteilgruppe ab und bildet eine (überwiegend sichtbare) innere Begrenzung der Passagierkabine.

Dabei kann das Seitenverkleidungselement eine Öffnung aufweisen, durch die der Sicherheitsgurt geführt ist. Der Gurtaufwickler ist somit hinter dem Seitenverkleidungselement angeordnet (bei Betrachtung in radialer Richtung aus der Passagierkabine heraus), und lediglich der Sicherheitsgurt wird durch die Öffnung des Seitenverkleidungselements geführt.

In einer Implementierungsvariante kann der Flugzeugabschnitt ferner einen in der Öffnung angeordneten Gurtumlenker umfassen. Dies ermöglicht die Anbringung des Gurtaufwicklers in der günstigsten Position im Hinblick auf die Anbringung an der Primärstrukturbaugruppe, während der Gurtumlenker dafür sorgt, dass der Sicherheitsgurt für den Passagier angenehm über der Schulter zu tragen ist.

Der Gurtumlenker kann ferner dazu eingerichtet sein, entlang der Öffnung, insbesondere in horizontaler Richtung (Längsrichtung des Flugzeugs), verschoben zu werden. So kann der Gurtumlenker eine optimale Position im Hinblick auf den zugehörigen Passagiersitz, aber auch im Hinblick auf den Gurtaufwickler, einnehmen.

In einer Implementierungsvariante kann der Flugzeugabschnitt ferner eine in der Öffnung angeordnete äußere Blende, die eine Umrandung der Öffnung abdeckt, umfassen. Eine solche äußere Blende dient insbesondere dem optischen Eindruck, da sie von der Innenseite, also von der Passagierkabine aus, sichtbar ist. Zum anderen kann die äußere Blende auch eine Schnittkante zum Bilden der Öffnung des Seitenverkleidungselements abdecken. Insbesondere kann die äußere Blende auch Rundungen aufweisen, wodurch der Sicherheitsgurt gut darüber gleiten kann, zum Beispiel wenn kein Gurtumlenker vorgesehen ist.

In einer Implementierungsvariante kann der Flugzeugabschnitt ferner eine in der Öffnung angeordnete innere Blende, die die Öffnung in den Bereichen verschließt, in denen der Sicherheitsgurt nicht angeordnet ist, umfasst. Bei der inneren Blende kann es sich um ein festes Element handeln, welches zum Beispiel in Bereichen der Öffnung eingebracht wird, an denen kein Gurtumlenker vorgesehen ist.

Lediglich als Beispiel kann die innere Blende aus einer Vielzahl von kleinen Blendenelementen bestehen. Damit lässt sich die Öffnung in den Bereichen vor und hinter dem Sicherheitsgurt variabel verschließen, je nach horizontale Position des Sicherheitsgurts relativ zu der Öffnung in dem Seitenverkleidungselement. Selbstverständlich können die Blendenelemente auch nur vor oder hinter dem Sicherheitsgurt angeordnet sein, wenn dieser sich an einem der Enden der Öffnung befindet. Gleiches gilt für die Verwendung eines Gurtumlenker, der bereits einen kleinen Teil der Öffnung verschließt.

Alternativ kann in der inneren Blende eine Gurtöffnung vorgesehen sein, durch die der Sicherheitsgurt geführt wird. Je nachdem, wo die Gurtöffnung in der inneren Blende angeordnet ist, kann die Lage des Sicherheitsgurts relativ zu dem zugehörigen Passagiersitz bestimmt werden. Mit anderen Worten bildet die Gurtöffnung einen Gurtumlenker.

Auf der anderen Seite kann die innere Blende auch Borsten umfassen (entsprechend einem Besen), durch die der Sicherheitsgurt geführt wird. Die Borsten sind dabei flexibel ausgestaltet, sodass sie die Öffnung um den Sicherheitsgurt herum verschließen. Diese Variante ist insbesondere bei einem horizontal verschiebbaren Gurtaufwickler günstig, da keine Elemente an dem Seitenverkleidungselement und/oder einer Blende geändert werden müssen.

In einer Implementierungsvariante kann der Flugzeugabschnitt ferner mindestens eine Passagiersitzreihe umfassen, die mehrere Sitze umfasst. Dabei kann ein Randsitz, der am nächsten zu der Primärstrukturbauteilgruppe angeordnet ist, einen Zweipunktgurt, der dazu eingerichtet ist, mit dem Sicherheitsgurt gekoppelt zu werden, umfassen. Der Sicherheitsgurt bildet somit einen Teil eines Dreipunktgurts, da er mit dem Zweipunktgurt zusammenwirken kann bzw. den Zweipunktgurt mit einer weiteren Rückhaltemöglichkeit ergänzt.

In einer Implementierungsvariante kann der Randsitz einen Gurtumlenker, der an einer Oberseite des Randsitzes angeordnet ist, umfassen. Ein solch angeordneter Gurtumlenker bietet hohen Komfort für den Passagier, da der Sicherheitsgurt im Bereich der Schulter des Passagiers eine feste Position (im Hinblick auf die Rückenlehne des Randsitzes) einnimmt, insbesondere unabhängig davon, welche horizontale Position der Gurtaufwickler einnimmt und/oder wo der Sicherheitsgurt durch das Seitenverkleidungselement in die Passagierkabine tritt.

In einer Implementierungsvariante kann der Zweipunktgurt einen Haken aufweisen, in den eine an einem freien Ende des Sicherheitsgurts angeordnete Öse einhängbar ist.

In einer Implementierungsvariante kann der Gurtaufwickler in der Primärstrukturbaugruppe so angeordnet sein, dass er sich oberhalb einer Oberkante der Rückenlehne des Randsitzes befindet.

In einer Implementierungsvariante kann der Flugzeugabschnitt ferner einen Gurtstraffer umfassen, der den Sicherheitsgurt strafft. Bei dem Gurtstraffer kann es sich um einen üblichen Gurtstraffer handeln, der beispielsweise in dem Gurtaufwickler enthalten ist oder an dem Sicherheitsgurt angebracht ist, zum Beispiel in einem Bereich hinter dem Seitenverkleidungselement, also in unmittelbarer Nähe der leiterförmigen Primärstrukturbaugruppe.

Gemäß einem zweiten Aspekt zum besseren Verständnis der vorliegenden Offenbarung umfasst ein Flugzeug mindestens einen Flugzeugabschnitt gemäß dem ersten Aspekt oder einer oder mehrerer der zugehörigen Implementierungsvariante.

Lediglich beispielhaft kann das Flugzeug mehrere Flugzeugtüren und einen solchen Flugzeugabschnitt pro Flugzeugtür aufweisen.

Die vorliegende Offenbarung ist nicht auf die hier beschriebenen Aspekte und Varianten beschränkt, insbesondere nicht in der beschriebenen Reihenfolge. Insbesondere soll die Beschreibung der Aspekte und Varianten nicht als eine bestimmte Einschränkung auf Gruppen von Merkmalen verstanden werden. Vielmehr können auch Kombinationen der Aspekte und Varianten gebildet werden, die unter die vorliegende Offenbarung fallen. Somit kann jede Variante oder jedes als optional geschriebenes Merkmal mit einem der anderen Aspekte oder Varianten oder Kombinationen davon kombiniert werden.

Nachfolgend wird die vorliegende Offenbarung anhand von beispielhaften Ausführungsformen beschrieben, die in den Figuren dargestellt sind, wobei:
- Figur 1: schematisch eine perspektivische Ansicht eines Flugzeugabschnitts zeigt;
- Figur 2: schematisch eine Ansicht einer Öffnung mit Gurtumlenker in einem Seitenverkleidungselement zeigt;
- Figur 3: schematisch Ansichten aus zwei verschiedenen Blickrichtungen auf einen Sicherheitsgurt mit Gurtumlenker am Passagiersitz zeigt;
- Figur 4: schematisch einen Flugzeugabschnitt mit angeschnalltem Passagier sowie Details eines Sicherheitsgurts zeigt;
- Figur 5: schematisch eine perspektivische Ansicht eines Flugzeugabschnitts von einer leiterförmigen Primärstrukturbaugruppe aus zeigt;
- Figur 6: schematisch zwei Varianten eines Halteelements für einen Gurtaufwickler zeigt; und
- Figur 7: schematisch eine Aufsicht eines Flugzeugs sowie zweier Flugzeugabschnitte im Detail zeigt.

In der folgenden Beschreibung werden zum Zweck der Erläuterung und nicht Einschränkung bestimmte Details erörtert, um ein allgemeines Verständnis der vorliegenden Offenbarung zu erlangen. Selbstverständlich kann die vorliegende Offenbarung durch andere Ausführungsbeispiele, die von diesen bestimmten Details abweichen, implementiert werden.

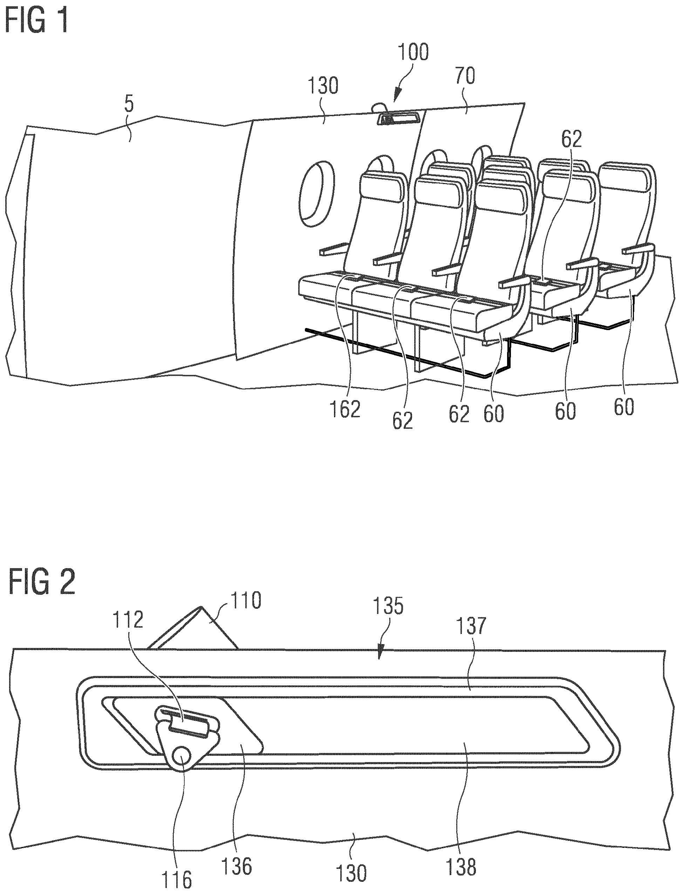

Figur 1 zeigt schematisch eine perspektivische Ansicht eines Flugzeugabschnitts 100, in dem mehrere Passagiersitzreihen 60 angeordnet sind. Die Sitzreihen 60 sind in Längsrichtung des Flugzeugs in einem bestimmten Abstand zueinander angeordnet, wie er zum Beispiel in einer Economy Class üblich ist, beispielsweise zwischen 28 Inch und 38 Inch (ca. 72 cm bis 96,5 cm). Jeder Passagiersitz ist mit einem Sicherheitsgurt 62 ausgestattet. Hierbei handelt es sich um einen üblichen Zweipunktgurt oder Beckengurt.

Der dargestellte Flugzeugabschnitt 100 kann beispielsweise direkt hinter einer Flugzeugtür 5 angeordnet sein (die Tür 5 ist in Figur 1 lediglich als Öffnung dargestellt). In diesem Bereich besteht insbesondere für den Randsitz (in Figur 1 der linke Sitz der ersten Sitzreihe), der am nächsten zur Tür 5 ist, das Problem, dass ein darin sitzender Passagier im Fall eines Aufpralls oder einer starken Verzögerung mit dem Kopf an ein Element (nicht dargestellt) der Tür 5 stoßen könnte, falls die Sitzreihe 60 zu nah an der Tür 5 angeordnet ist.

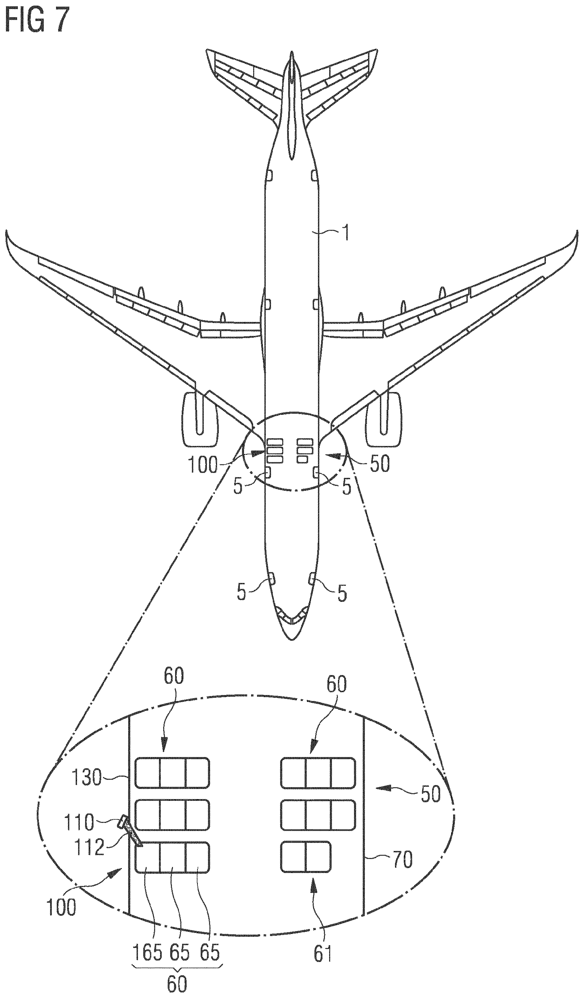

Dies wird zunächst mit Bezug auf die Figur 7 näher erläutert. Das in Figur 7 dargestellte Flugzeug 1 weist mehrere Türen 5 auf, wobei die Flugzeugabschnitte 50, 100 im Bereich der zweiten Türe 5 eingehender betrachtet werden.

So ist zum Beispiel auf der rechten Seite in Figur 7 ein üblicher Flugzeugbereich 50 dargestellt. Die Flugzeugkabine wird hier durch ein inneres Seitenverkleidungselement 70 begrenzt. Neben den üblichen Sitzreihen 60 mit zum Beispiel drei Passagiersitzen, ist eine weitere Sitzreihen 61 direkt hinter der Tür 5 mit nur zwei Passagiersitzen angeordnet. Der dritte Sitz neben dem Seitenverkleidungselement 70 wurde hier weggelassen. Dies hat den Hintergrund, dass in dem Bereich der Tür 5 verschiedenste Elemente angeordnet sind, die weiter in die Passagierkabine ragen als das Seitenverkleidungselement 70. Als Beispiel sind hier eine Einhausung einer Notrutsche, die in der unteren Hälfte der Tür 5 vorgesehen ist, Griffe und Hebel der Tür 5, sowie ein Verstärkungsrahmen um die Türöffnung herum (der weiter in das Innere der Passagierkabine ragt als übliche Rahmen 11) genannt. Im Fall einer starken Verzögerung oder eines Aufpralls des Flugzeugs 1 könnte ein Passagier in einem Randsitz direkt hinter der Tür 5, der nur durch einen Zweipunktgurt gesichert ist, nach vorne fallen und mit dem Kopf gegen eines dieser Elemente stoßen. Daher wurde der Randsitz in der Sitzreihen 61 weggelassen.

Auf der linken Seite des Details in Figur 7 ist ein Flugzeugabschnitt 100 gemäß der vorliegenden Offenbarung dargestellt. Hier ist insbesondere die erste Sitzreihen nach der Tür 5 mit einem Randsitz 165 ausgestattet. Die Sitzreihe 60 ist somit eine übliche Sitzreihe mit insgesamt drei Passagiersitzen 65, 165. Für den Randsitz 165 ist ein zusätzlicher Sicherheitsgurt 112 vorgesehen. Der Sicherheitsgurt 112 ist auf einem Gurtaufwickler 110 aufgewickelt, der hinter einem entsprechenden Seitenverkleidungselement 130 angeordnet ist, wobei der Sicherheitsgurt 112 durch eine Öffnung in dem Seitenverkleidungselement 130 in die Passagierkabine geführt wird.

Wieder mit Bezug auf Figur 1, dort ist zu erkennen, dass im hinteren Bereich des Flugzeugabschnitts ein übliches Seitenelement 70 angeordnet sein kann. Das Seitenelement 130 neben dem Randsitz 165 hingegen weist eine Öffnung auf, durch die ein Sicherheitsgurt 112 geführt ist. Dieser Sicherheitsgurt kann von einem Passagier in dem Randsitz 165 heruntergezogen werden, über die Schulter des Passagiers gelegt werden und in einem speziellen Zweipunktgurt 162 verankert werden. Dadurch wird ein Dreipunktgurt geschaffen, der den Passagier in dem Randsitz 165 im Fall einer starken Verzögerung oder eines Aufpralls zurückhält. Der Randsitz 165 muss hierfür nicht verändert werden, da die Rückhaltelasten von dem Sicherheitsgurt 112 nicht in die Sitzreihe 60 eingeleitet werden.

Figur 2 zeigt schematisch eine Ansicht einer Öffnung 135 mit Gurtumlenker 136 in einem Seitenverkleidungselement 130, wie es schematisch auch in Figur 1 dargestellt ist.

Das Seitenverkleidungselement 130 kann sich beispielsweise vor dem Gurtaufwickler 110 befinden, diesen also verdecken. In Figur 2 ist das Seitenverkleidungselement 130 so dargestellt, dass ein Teil des Gurtaufwicklers 110 sichtbar ist. Dies soll nicht einschränkend für die vertikale Lage der Öffnung 135 verstanden werden, sondern lediglich dem Verständnis dienen, dass das Seitenverkleidungselement 130 den Gurtaufwickler 110 (von der Passagierkabine aus betrachtet) verdeckt.

Der in der Öffnung 135 angeordnete Gurtumlenker 136 weist eine Öffnung auf, durch die der Sicherheitsgurt 112 geführt ist. An dem freien Ende des Sicherheitsgurts 112 ist eine Lasche vorgesehen, die zum Beispiel eine Öse 116 (oder eine einfache Öffnung) aufweist. Über diese Öse 116 kann der Sicherheitsgurt 112 mit dem speziellen Zweipunktgurt 162 des Randsitz des 165 gekoppelt werden, um den Dreipunktgurt herzustellen.

Der Gurtumlenker 136 kann dazu eingerichtet sein, horizontal verschoben zu werden. Beispielsweise kann der Gurtumlenker 136 an einer beliebigen Position innerhalb der Öffnung 135 verschoben werden und in dieser Position befestigt werden. Alternativ kann der Gurtumlenker 136 an festgelegten Positionen innerhalb der Öffnung 135 montiert werden. Bei den festgelegten Positionen kann es sich zum Beispiel um Positionen in einem Abstand von 1 Inch (ca. 2,54 cm) handeln. Dies ist auch der übliche Abstand von festgelegten Positionen, in denen die Sitzreihen 60 innerhalb des Flugzeugs 1 in Längsrichtung montiert werden können. Mit anderen Worten kann der Gurtumlenker 136 passend zu dem Randsitz 165 in der Öffnung 135 angeordnet werden.

Um eine Schnittkante der Öffnung 135 in dem Seitenverkleidungselement 130 zu verdecken, kann eine äußere Blende 137 angeordnet werden. Die äußere Blende 137 kann zum Beispiel auch als Halterung für den Gurtumlenker 136 fungieren.

Da der Sicherheitsgurt 112 auch ohne Gurtumlenker 136 durch die Öffnung 135 geführt werden kann, kann die äußere Blende 137 auch abgerundet sein, um ein Gleiten des Sicherheitsgurts 112 über die äußere Blende 137 zu gewährleisten.

Ferner können in der Öffnung 135 eine oder mehrere innere Blenden 138 vorgesehen sein, die die Öffnung in dem/den Bereich/en verschließt/verschließen, in denen der Sicherheitsgurt 112 (und/oder der Gurtumlenker 136) nicht angeordnet ist. In Figur 2 ist eine einzelne innere Blende 138 dargestellt, da der Sicherheitsgurt 112 an einem vorderen Ende der Öffnung 135 durch das Seitenverkleidungselement 130 geführt wird. Selbstverständlich können mehrere innere Blenden 138 vorgesehen sein, insbesondere wenn sowohl vor als auch hinter dem Sicherheitsgurt 112 die Öffnung 135 verschlossen werden soll. Auch können in Längsrichtung kurze innere Blenden (nicht explizit dargestellt) verwendet werden, um den jeweiligen Bereich der Öffnung 135 vor und/oder hinter dem Sicherheitsgurt 112 variabel zu verschließen.

Alternativ kann die innere Blende 138 auch durch eine Mehrzahl von Borsten (nicht explizit dargestellt) umgesetzt werden. Diese (flexiblen) Borsten erlauben ein Durchdringen der Öffnung 135 durch den Sicherheitsgurt 112 an jeder beliebigen Stelle der Öffnung 135.

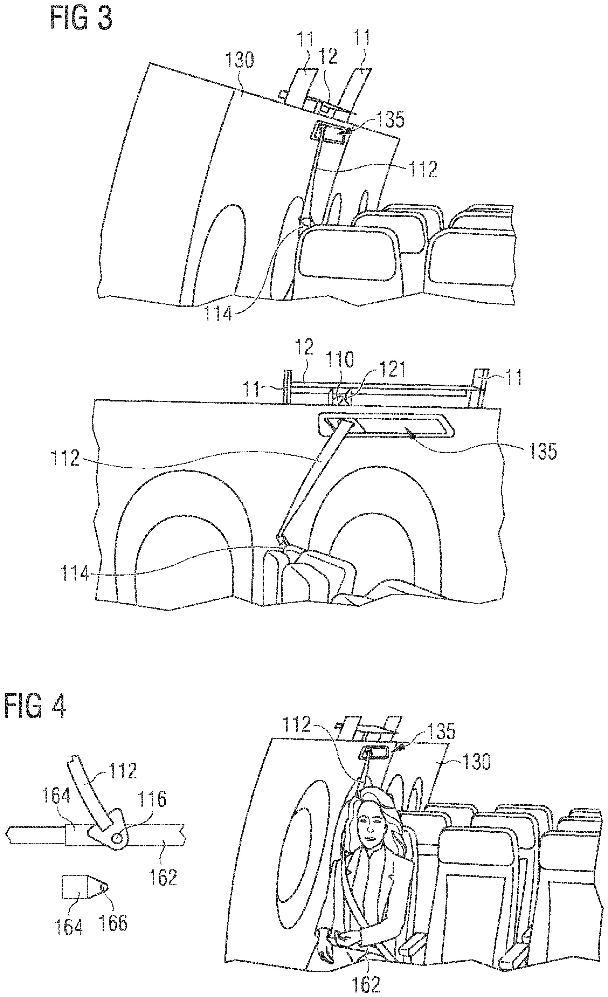

Figur 3 zeigt schematisch Ansichten aus zwei verschiedenen Blickrichtungen auf einen Sicherheitsgurt 112 mit Gurtumlenker 114 am Passagiersitz, insbesondere dem Randsitz 165. Durch diesen Gurtumlenker 114 wird der Sicherheitsgurt 112 von der Öffnung 135 aus bereits zu einer Position gebracht, in der der Sicherheitsgurt 112 für den Passagier in dem Randsitz 165 gut erreichbar ist. Zudem wird der Tragekomfort für den Passagier in dem Randsitz 165 erhöht, da der Sicherheitsgurt 112 eine feste Position relativ zu der Rückenlehne des Randsitzes 165 einnimmt.

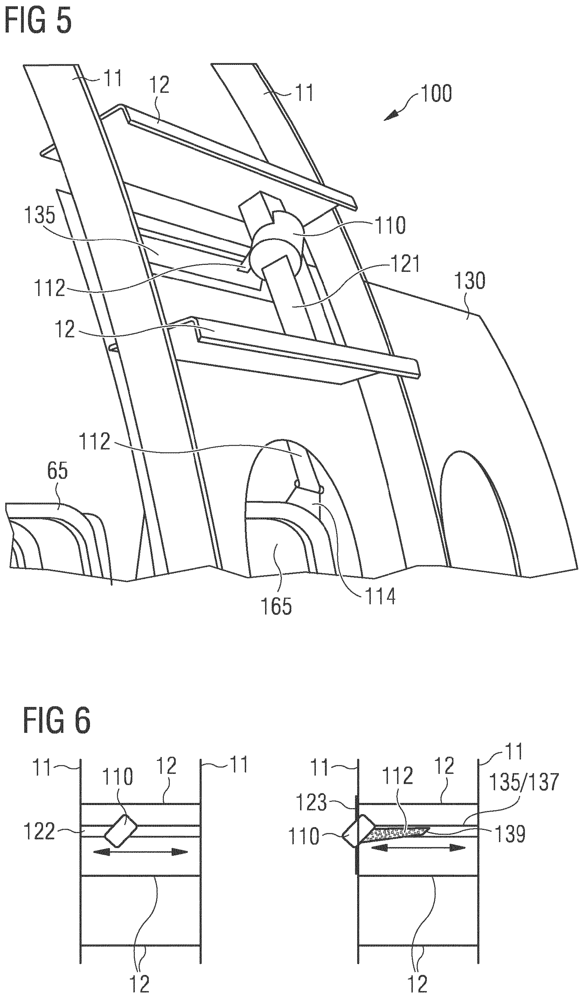

Figur 3 zeigt schematisch Teile einer leiterförmigen Primärstrukturbaugruppe, die mindestens zwei Rahmen 11 und eine Mehrzahl von Stringer 12 (in Figur 3 ist nur ein Stringer 12 sichtbar) umfasst. An dieser Primärstrukturbaugruppe kann der Gurtaufwickler 110 direkt oder indirekt befestigt werden, wie dies im Hinblick auf die Figuren 5 und 6 noch näher erläutert wird.

Der Gurtaufwickler 110 kann in seiner horizontalen Position variabel angeordnet werden. So kann der Gurtaufwickler 110 beispielsweise an jeder beliebigen Position hinter der Öffnung 135 angeordnet werden. Dies ermöglicht eine optimale Gurtführung, zum Beispiel ohne dass der Sicherheitsgurt 112 an dem Seitenverkleidungselement 130 bzw. der äußeren Blende 137 anliegt. Ein solches Anliegen des Sicherheitsgurts 112 könnte im Fall eines akuten Einsatzes des Sicherheitsgurts 112 dazu führen, dass das Seitenverkleidungselement 130 beschädigt wird, oder aus seiner Halterung gerissen wird.

Figur 4 zeigt schematisch einen Flugzeugabschnitt 100 mit angeschnalltem Passagier in dem Randsitz 165 sowie Details eines Sicherheitsgurts 112. In Figur 4 ist zu erkennen, wie der Sicherheitsgurt 112 über die Schulter des Passagiers in dem Randsitz 165 geführt wird, und somit den Oberkörper des Passagiers sichert. Damit wird das Risiko gesenkt, dass sich der Passagier im Fall einer starken Verzögerung oder eines Aufpralls des Flugzeugs 1 nach vorne beugt und mit dem Kopf gegen ein Element vor dem Randsitz 165 prallt.

Der Zweipunktgurt 162 des Randsitzes 165 kann sich zum Beispiel dadurch von einem üblichen Zweipunktgurt 62 unterscheiden, dass ein Haken 166 oder ähnlicher Vorsprung vorgesehen ist, in den die Öse 116 des Sicherheitsgurts 112 eingehängt werden kann. Der Haken 166 kann zum Beispiel an einer Schnalle 164 oder Schließe des Zweipunktgurtes 162 angeordnet sein. Selbstverständlich kann an dem Sicherheitsgurt 112 ein Haken oder ähnliches Element vorgesehen sein, welches mit einem korrespondierenden Element des Zweipunktgurt 162 gekoppelt werden kann.

Figur 5 zeigt schematisch eine perspektivische Ansicht eines Flugzeugabschnitts 100 von einer leiterförmigen Primärstrukturbaugruppe aus. Mit anderen Worten wird der Flugzeugabschnitt 100 von der Außenseite des Flugzeugs 1 aus betrachtet, wobei die Außenhaut des Flugzeugs 1 entfernt ist. So sind die Elemente der leiterförmigen Primärstrukturbaugruppe gut zu erkennen. Hierzu zählen insbesondere die im Querschnitt des Flugzeugs angeordneten Rahmen 11 (auch als Frame bezeichnet) sowie die in Längsrichtung des Flugzeugs angeordneten Stringer 12.

Der hier offenbarte Flugzeugabschnitt 100 umfasst ein Halteelement 121, an dem der Gurtaufwickler 110 befestigt ist. Figur 5 stellt eine Variante dar, in der das Halteelement zwischen zwei benachbarten Stringern der Mehrzahl von Stringer 12 angeordnet ist, und an jedem der zwei benachbarten Stringer 12 befestigt ist. Dadurch lassen sich die Lasten des Sicherheitsgurts 112 sehr gut in die Primärstrukturbaugruppe einleiten.

Das Halteelement 121 kann ferner dazu eingerichtet sein, horizontal verschoben zu werden. Hierfür können an den benachbarten Stringern 12 verschiedene Haltepunkte (nicht dargestellt) vorgesehen werden, an denen das Halteelement 121 befestigt werden kann. Der Abstand zwischen zwei solcher Haltepunkte kann (wie oben dargelegt) dem Abstand entsprechen, in dem die Sitzreihen 60 in Längsrichtung des Flugzeugs 1 befestigt werden können. Alternativ oder zusätzlich können Halteschienen an den benachbarten Stringern 12 angeordnet sein, in denen das Halteelement 121 gleiten kann und an jeder beliebigen Position darin befestigt werden kann.

In Figur 5 ist das in Flugzeug Längsrichtung hinten anschließende, übliche Seitenverkleidungselement 70 entfernt, wodurch der übliche seitliche Passagiersitz 65 der zweiten Sitzreihe 60 erkennbar ist. Da bei diesem üblichen Randsitz 65 nicht die Gefahr besteht, dass der Passagier mit seinem Kopf auf ein vor ihm angeordnetes Bauelemente stößt, das größere Verletzungen nach sich zieht, ist kein zusätzlicher Sicherheitsgurt 112 vorgesehen.

Selbstverständlich können auch sämtliche Randsitze 65, 165 in dem Flugzeug mit einem zusätzlichen Sicherheitsgurt 112 ausgestattet werden. Hierfür müssten lediglich mehrere Gurtaufwickler 110 und Sicherheitsgurt 112 in den jeweiligen leiterförmigen Primärstrukturbaugruppen angeordnet und entsprechend mehrere Seitenelemente 130 mit Öffnung/en 135 in der Passagierkabine angeordnet werden.

Figur 6 zeigt schematisch zwei weitere Varianten eines Halteelements für einen Gurtaufwickler 110. Links in Figur 6 ist das Halteelement 122 zwischen zwei benachbarten Rahmen 11 der mindestens zwei Rahmen 11 angeordnet und an jedem der zwei benachbarten Rahmen 11 befestigt. Dabei kann das Halteelement 122 so ausgestaltet sein, dass sich der Gurtaufwickler 110 in Längsrichtung des Flugzeugs 1 (horizontal) verschieben lässt, was in Figur 6 durch einen Doppelpfeil dargestellt ist. Der Gurtaufwickler 110 kann entweder an jeder beliebigen Position entlang des Halteelement 122 befestigt werden, oder in festgelegten Abständen (wie oben beschrieben zum Beispiel mit einem jeweiligen Abstand von 1 Inch (ca. 2,54 cm)).

Auf der rechten Seite in Figur 7 ist eine weitere Variante eines Halteelement 123 dargestellt, dass an einem der mindestens zwei Rahmen 11 befestigt ist. Das Halteelement 123 kann hier durch eine oder mehrere Laschen an dem Gurtaufwickler 110 implementiert sein. Diese Laschen können an dem Rahmen 11 befestigt werden. Alternativ oder zusätzlich kann das Halteelement 123 eine Aufdopplung auf dem Rahmen 11 sein, an der der Gurtaufwickler 110 befestigt ist.

Der Sicherheitsgurt 112 kann zum Beispiel durch einen Gurtumlenker 136, 139 in der Öffnung 135 geführt werden. Aufgrund der feststehenden Position des Gurtumlenkers 110 in dieser Variante, kann der Gurtumlenker 136, 139 horizontal verschoben werden, um eine optimale Position des Sicherheitsgurtes 112 relativ zu dem Randsitz 165 herstellen zu können. In Figur 6 ist der Gurtumlenker 139 in Form eines Schlitzes in einer inneren Blende 138 dargestellt. Dafür müssten unterschiedliche innere Blenden 138 vorgehalten werden, bei denen der Schlitz förmige Gurtumlenker 139 an verschiedenen horizontalen Positionen vorgesehen ist. Alternativ kann die innere Blende 138 aus mehreren Einzelelementen bestehen, von denen eines den Gurtumlenker 139 umfasst und die anderen geschlossene Blenden sind, die vor und/oder hinter der Blende mit Gurtumlenker 139 in die Öffnung 135 eingesetzt werden. Dies sind lediglich beispielhafte Varianten. Selbstverständlich kann auch ein Gurtumlenker 136, wie er in Figur 2 gezeigt ist, eingesetzt werden.

In Figur 6 ist der Gurtaufwickler 110 so dargestellt, dass er in dem Rahmen 11 angeordnet ist. Mit anderen Worten hat der Rahmen 11 also eine Öffnung für den Gurtaufwickler 110. Selbstverständlich kann der Gurtaufwickler 110 auch neben dem Rahmen 11 angeordnet werden, sodass keine Öffnung in dem Rahmen 11 vorgesehen werden muss. Letzteres vereinfacht die Herstellung des Flugzeugs 1, und der Rahmen 11 wird nicht durch das Vorsehen einer Öffnung geschwächt.

Wieder mit Bezug auf Figur 7 kann ein Flugzeugabschnitt 100 auch eine Kombination der beiden in Figur 7 dargestellten Flugzeugabschnitte 50, 100 enthalten. Beispielsweise kann die erste Sitzreihe 61 hinter einer Tür 5 weniger Passagiersitze 65, 165 aufweisen als die anderen Sitzreihen 60. Insbesondere kann der Randsitz 165 frei bleiben, wie dies rechts in den Detail der Figur 7 dargestellt ist.

Ein zusätzlicher Sicherheitsgurt 112 kann auch hier implementiert werden, wie er in Bezug auf die Figuren 1 des 6 beschrieben ist und links in dem Detail der Figur 7 schematisch dargestellt ist. Der freie Platz mit zusätzlichen Sicherheitsgurt 112 kann nun beispielsweise von einer Person mit Rollstuhl verwendet werden. Der zusätzliche Sicherheitsgurt 112 bietet eine zusätzliche Rückhaltemöglichkeit für den Rollstuhl in dem Flugzeug 1.

## Patentansprüche

1. Flugzeugabschnitt (100), der einen Teil einer Kabine eines Flugzeugs (1) begrenzt, wobei der Flugzeugabschnitt (100) umfasst:
eine leiterförmige Primärstrukturbaugruppe, die mindestens zwei Rahmen (11) und eine Mehrzahl von Stringer (12) umfasst;
ein Halteelement (121, 122, 123);
einen Gurtaufwickler (110), der an dem Halteelement befestigt ist; und
einen Sicherheitsgurt (112), der auf dem Gurtaufwickler aufgewickelt ist.

2. Flugzeugabschnitt (100) gemäß Anspruch 1, wobei:
das Halteelement (121) zwischen zwei benachbarten der Mehrzahl von Stringer (12) angeordnet und an jedem der zwei benachbarten Stringer (12) befestigt ist, oder
das Halteelement (122) zwischen zwei benachbarten der mindestens zwei Rahmen (11) angeordnet und an jedem der zwei benachbarten Rahmen (11) befestigt ist, oder
das Halteelement (123) an einem der mindestens zwei Rahmen (11) befestigt ist.

3. Flugzeugabschnitt (100) gemäß Anspruch 1 oder 2, wobei das Halteelement (121, 122) und/oder der Gurtaufwickler (110) dazu eingerichtet ist, mindestens horizontal verschoben zu werden.

4. Flugzeugabschnitt (100) gemäß einem der Ansprüche 1 bis 3, ferner umfassend:
ein Seitenverkleidungselement (130), das die Kabine des Flugzeugs (1) seitlich begrenzt und mit wenigstens manchen der mindestens zwei Rahmen (11) und/oder der Mehrzahl von Stringer (12) gekoppelt ist,
wobei das Seitenverkleidungselement (130) eine Öffnung (135) aufweist, durch die der Sicherheitsgurt (112) geführt ist.

5. Flugzeugabschnitt (100) gemäß Anspruch 4, ferner umfassend:
einen in der Öffnung (135) angeordneten Gurtumlenker (136, 139), und/oder
eine in der Öffnung (135) angeordnete äußere Blende (137), die eine Umrandung der Öffnung abdeckt, und/oder
eine in der Öffnung (135) angeordnete innere Blende (138), die die Öffnung in den Bereichen verschließt, in denen der Sicherheitsgurt (112) nicht angeordnet ist.

6. Flugzeugabschnitt (100) gemäß einem der Ansprüche 1 bis 5, ferner umfassend:
mindestens eine Passagiersitzreihe (60), die mehrere Sitze (65, 165) umfasst,
wobei ein Randsitz (165), der am nächsten zu der Primärstrukturbauteilgruppe angeordnet ist, umfasst:
einen Zweipunktgurt (162), der dazu eingerichtet ist, mit dem Sicherheitsgurt (112) gekoppelt zu werden, und/oder
einen Gurtumlenker (114), der an einer Oberseite des Randsitzes (165) angeordnet ist.

7. Flugzeugabschnitt (100) gemäß Anspruch 6, wobei der Zweipunktgurt (162) einen Haken (166) aufweist, in den eine an einem freien Ende des Sicherheitsgurts (112) angeordnete Öse (116) einhängbar ist.

8. Flugzeug (1), umfassend:
mindestens einen Flugzeugabschnitt (100) gemäß einem der Ansprüche 1 bis 7.
